# EUROPEAN PATENT SPECIFICATION

(11) **EP 0 354 796 B1**
(45) Date of publication and mention of the grant of the patent: **19.10.1994**
(21) Application number: 89308160.4
(22) Date of filing: 10.08.1989
(51) Int. Cl.: A01B 29/06, A01B 29/04

(54) **Coil apparatus having cleaning means, and earth working apparatus incorporating the coil apparatus**
Spiralgerät mit Abstreifer und Bodenbearbeitungsmaschine, das dieses Spiralgerät inkorporiert
Dispositif à spirale, et machine pour cultiver le sol incorporant ce dispositif à spirale

(30) Priority: 10.08.1988 GB 8818953
(43) Date of publication of application: 14.02.1990
(73) Proprietor: FLEXI-COIL (UK) LIMITED, York YO4 4NF (GB)
(72) Inventor: Bradley, John, Pocklington North Humberside (GB)
(74) Representative: Needle, Jacqueline

(56) References cited:
- EP-A- 0 294 903
- US-A- 2 261 893

## Description

The present invention relates to apparatus comprising a coil and means for cleaning the coil. The invention also relates to earth working apparatus and to means for cleaning such apparatus.

A number of forms of apparatus used for earth working include a flexible helical coil mounted on a frame for rotation about the longitudinal axis of the coil relative to the frame. In operation the coil rotates about a substantially horizontal axis by the effect of contact of the earth with the coil when the coil is dragged across the ground, for example by a tractor. The rotation of the coil may be used for example for crumbling the earth to provide a seed bed, or the apparatus may be used as a plough packer for consolidating the land after ploughing, again to provide a seed bed.

A difficulty with such coils is that, particularly in wet conditions, earth clings to the coils, blocking the coils and reducing efficiency of operation.

US-A-2261893 illustrates a cylindrical roller provided with external helical ribs for compacting and rolling earth. To clean the helical ribs a rotatable scraper shaft is mounted to extend parallel to the axis of the roller and carries a number of prongs to mesh with the ribs.

US-RE-18039 shows a cylindrical roller carrying one or more plow elements helically disposed on its exterior surface for plowing. To clean the plow elements a reciprocable bar is mounted to extend parallel to the axis of the roller, and carries a number of cleaner elements to engage the plow elements. The camming action of the plow elements on the cleaner elements reciprocates the bar.

However, practical attempts to utilise such systems to scrape excess earth off earth working coils have been unsuccessful in adequately cleaning the turns of the coil.

It is an object of the present invention to provide apparatus comprising efficient means for cleaning a coil.

According to a first aspect of the present invention there is provided for some designated states apparatus comprising a coil mounted for rotation about the longitudinal axis of the coil, and means for cleaning the coil, said cleaning means comprising at least one cleaning element for engaging with or protruding into said coil, the or each cleaning element being supported by a shaft extending substantially parallel to said longitudinal axis of the coil, the apparatus being characterised in that means are provided for reciprocating said shaft in a direction generally towards and away from said coil.

The present invention also extends for some designated states to an earth working apparatus comprising a frame, a coil supported by the frame for rotation about the longitudinal axis of the coil in contact with the earth for the purposes of earth working, and means for cleaning the coil, said cleaning means comprising at least one cleaning element for engaging with or protruding into said coil, the or each cleaning element being supported by a shaft extending substantially parallel to said longitudinal axis of the coil, the apparatus being characterised in that means are provided for reciprocating said shaft in a direction generally towards and away from said coil.

Preferably, said shaft is arranged to be reciprocated in a direction having at least at least a component substantially perpendicular to said longitudinal axis.

It will be appreciated that during rotation of the coil, the spaces between turns of the coil in effect progress along said longitudinal axis of the coil. It is therefore not possible to clean the coil by fixed protrusions which intrude into the spaces between the turns of the coils, since such fixed protrusions would jam against the rotating turns of the coil. The reciprocation of the shaft enables cleaning elements which protrude into the coil to be moved out of any potential jamming position.

EP-A-0294-903 has an earlier priority date than the present application but was published after the priority date and also designates DE, FR, IT and NL (Art.54(3)). EP-A-0294-903 discloses means for reciprocating the shaft in a direction generally towards and away from the coil.

In an embodiment for some designated states, at least one camming element is arranged to engage said coil such that a camming action is produced between said camming element and said coil which is arranged to move said shaft in said direction having at least a component substantially perpendicular to said longitudinal axis. Preferably, said shaft is resiliently biassed and said camming action is arranged to move said shaft against the action of the bias.

In one embodiment at least two spaced camming elements are carried by said shaft, and a plurality of cleaning elements are also carried by said shaft. For example, said cleaning elements may comprise spikes, bars, blades or other projections arranged to protrude between turns of the coil. The camming action is arranged periodically to move the projections clear of the coil to allow the effective longitudinal progression of the spaces of the coil upon rotation, and therefore to prevent jamming.

Preferably, said camming elements are also arranged to effect cleaning of the coil. For example, each said camming element comprises a body having a peripheral surface surrounding said shaft and arranged to engage turns of said coil under the action of the bias of said shaft. Said peripheral surface has at least one portion which protrudes to provide the camming action. It will be appreciated that as a turn of the coil progresses effectively along the longitudinal axis upon rotation of the coil it is arranged to move longitudinally relative to said peripheral surface of the camming element whereby cleaning is effected. Furthermore, movement of the turn of the coil to and along said protruding portion progresses said turn along a non-linear, generally longitudinal path and thereby effects movement of said shaft in a direction substantially perpendicular to said longitudinal axis.

In an embodiment, the shaft carries a plurality of cleaning elements, and each said cleaning element is also configured to constitute a camming element as defined above. Preferably, each turn of the coil has at least one said cleaning and camming element associated therewith.

The profile of the peripheral surfaces of said camming and cleaning and camming elements may be arcuate, or have a generally saw-toothed shape.

In earth working apparatus where the coil is supported by a frame, said shaft is preferably also supported by said frame. For example, in an embodiment the ends of said shaft are each journalled in bearings carried by a respective bearing plate and each said bearing plate is movably mounted on said frame. Said bearing plates may be hingedly or slidably mounted on said frame, for example. Where said bearing plates are slidably mounted, it is generally arranged for the reciprocation of the shaft to be substantially perpendicular to said longitudinal axis. Where there is a hinged connection the movement of the shaft will generally follow a substantially arcuate path having a component in said substantially perpendicular direction.

In one embodiment said shaft is resiliently biassed by tension springs connected between said bearing plates and said frame. Of course, alternative biassing means may be provided as required.

In one preferred form, the said cleaning means comprises a plurality of camming and cleaning bodies arranged along the length of said shaft, each said body being substantially in the shape of two adjoining truncated cones.

In a preferred form, said coil is substantially helical and the pitch of said helical coil is substantially the same as that of said cleaning and camming bodies such that said bodies protrude between the turns of said coil in a regular manner. Of course, in other arrangements a different pitch may be used, for example, said bodies may be arranged to have a pitch which is a multiple or a fraction of the pitch of the helical coil.

Preferably, said helical coil has a central axial core extending substantially parallel to said shaft.

It will be appreciated that it would be possible for said shaft to be reciprocated by drive means independent of said coil. However, it is generally preferred that the drive for said shaft be by way of the camming action caused by the contact between the camming elements and the coil as described above.

In the case of an earth working coil, it is preferred that the earth working coil is driven in rotation by the effect of contact with the ground as the coil is moved over the earth. Thus, at least in preferred embodiments of the invention, there may be provided cleaning means for an earth working coil which is powered entirely by the movement of the earth working coil over the ground, and which allows thorough cleaning of the earth working coil by the protrusion of cleaning elements into the spaces between the turns of the coil by the direct contact of the cleaning elements against the turns of the earth working coil. Preferably the bodies of the cleaning elements are made of wood, rubber, polypropylene or the like. This enables efficient cleaning of the turns of the earth working coil without scraping. There is therefore little wear on the coil as a result of the cleaning action.

Embodiments of the present invention will hereinafter be described, by way of example, with reference to the accompanying drawings, in which:
Figure 1 shows a diagrammatic plan view of an earth working apparatus embodying the invention;
Figure 2 shows a side view of the apparatus taken along the line B-B of Figure 1;
Figure 3 shows a diagrammatic plan view of an alternative cleaning means; and
Figures 4 and 5 show diagrammatic plan views of further embodiments of the cleaning means.

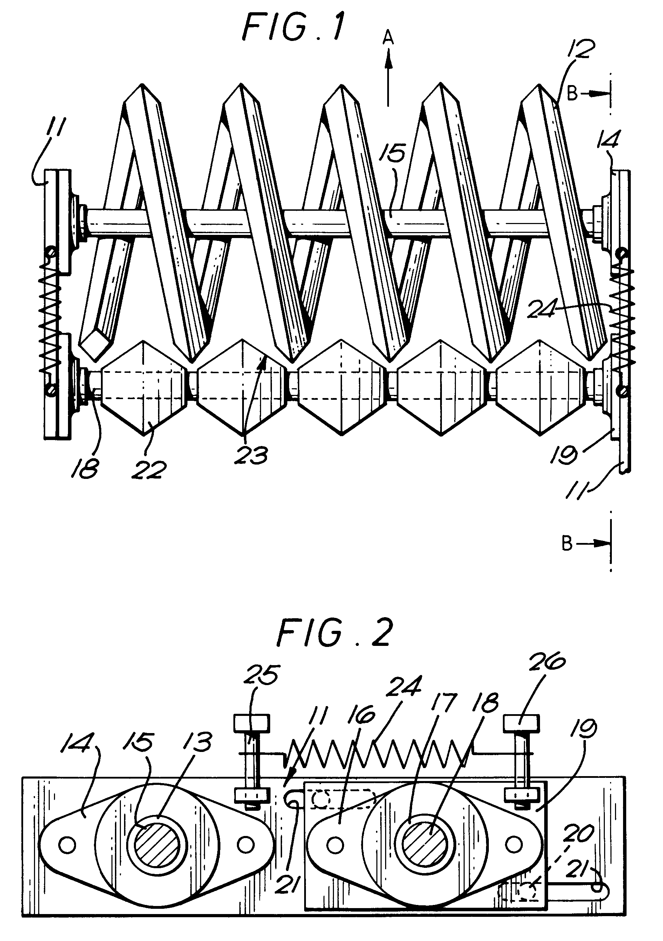

Referring to Figures 1 and 2, an earth working apparatus includes spaced frame members 11 arranged to be attached to a vehicle, for example at the rear of a tractor, for movement over the land in a direction for example as indicated by the arrow A in Figure 1, although in some circumstances the apparatus may move in the opposite direction to the direction A.

A flexible helical coil 12 is mounted for example, by way of plates (not shown), on a central core 15 which is journalled for rotation about the longitudinal axis of the coil 12. The coil 12 may be of conventional design, for example a 1½ inch square steel bar wound along a helix having a pitch of 5½ inches. In operation the coil 12 is rotated by the effect of the coil being dragged over the ground by the tractor.

It will be seen that each end of the core 15 of the coil 12 is journalled in bearings indicated at 13 carried by a bearing plate 14. It will be seen, for example from Figure 2, that each said bearing plate 14 is fixed to the inside of the respective frame member 11.

Each frame member 11 also carries a further bearing plate 16 which mounts by way of a bearing assembly 17 a shaft 18 of a cleaning assembly for the coil 12. This bearing plate 16 is fixed to a slide 19. The slide 19 comprises a substantially planar member carrying two pins 20, each of which is received within an elongate recess 21 formed in the inner surface of the frame member 11. It will therefore be appreciated that each slide 19 carrying a respective bearing plate 16 is slidable relative to the frame member 11 towards and away from the bearing plate 14.

Each bearing plate 16 mounts one end of the shaft 18. This shaft 18 extends substantially parallel to the core 15 and hence to the longitudinal axis of the coil 12. It will be appreciated that sliding movement of the slides 19 relative to the frame members 11 will cause movement of the shaft 18 in a direction substantially perpendicular to the longitudinal axis of the coil 12 towards and away from the coil.

Mounted on the shaft 18 is a plurality of camming and cleaning bodies 22. Each of these bodies 22 has a peripheral surface 23 having a substantially V-shaped profile defining an annulus substantially centrally of the length of the body 22, which annulus protrudes beyond the rest of the peripheral surface 23 of the body. Each of the bodies 22 is substantially in the form of two adjoined truncated cones. The peripheral surface 23 of each body 22 surrounds, and is substantially symmetical relative to, the axis of the shaft 18, and each of the bodies 22 is rotatable relative to the shaft 18. It will be seen that in the embodiment of Figure 1 each body 22 protrudes within a respective space between adjacent turns of the coil 12.

A tension spring 24 is associated with each end of the shaft 18 and is arranged to urge the shaft 18 towards the core 15 of the coil 12 whereby the peripheral surfaces of the bodies 22 are urged into contact with the turns of the coil 12. As can be seen from Figures 1 and 2, one end of each spring 24 is fixed by way of a post 25 to the respective frame member 11 whilst the other end of the spring is fixed to a post 26 carried by the slide 19.

In operation the earth working coil 12 is rotated as it is pulled along the ground by the effect of its contact with the ground. It will be appreciated that this rotation of the coil 12 rotates the bodies 22 with which the coil is in contact. As the coil 12 rotates, the spaces between the turns of the coil effectively progress along the longitudinal axis of the coil. Thus, the point of contact between each turn of the coil and its associated body 22 similarly progresses along the peripheral surface 23 of that body whereby cleaning of the turns of the coil 12 is effected. Of course, as the point of contact between a turn of the coil and the body 22 moves along the peripheral surface of the body, the shape of the profile of that surface causes the turn to progress along a non-linear path. This forces the body 22, and hence the shaft 18 to move in a direction substantially perpendicular to said longitudinal axis. In this respect, it will be appreciated that as each turn moves along a body 22 from its end towards the central projecting annulus thereof the shaft 18 is pushed outwardly against the bias of the springs 24. During the continued movement of the turn along the rest of the peripheral surface of the body the springs 24 are enabled to return the shaft 18 to its innermost position. It will therefore be appreciated that the turns of the coil and the peripheral surfaces of said bodies 22 cooperate to provide a camming action causing reciprocation of the shaft 18.

The bodies 22, which may be made of wood, rubber, polypropylene or similar material, effectively clean the turns of the coil because they are maintained in contact therewith by the bias exerted by the springs 24. Although the cleaning action is very efficient, it has been found that there is little or no wear on the coil which can be attributed to the cleaning means. Furthermore, because each body 22 is a solid body spanning the space between each turn of the coil 12 the bodies 22 also prevent the formation of bridges of material across the spaces between the turns of the coil.

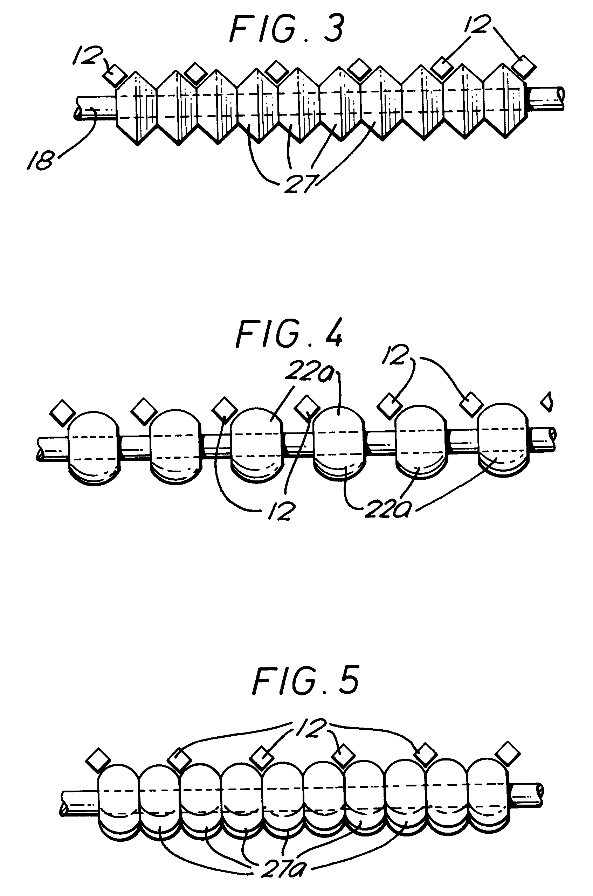

In the embodiment illustrated in Figures 1 and 2, a single body 22 is associated with each turn of the coil 12. Figures 3 shows diagrammatically an alternative embodiment utilising bodies of similar shape to those illustrated in Figure 1, but in which two adjacent bodies 27 are associated with each turn of the coil 12. Again, each of the bodies 27 of Figure 3 has a substantially V-shaped profile to its peripheral surface. However, during one rotation of the coil 12 one turn thereof effectively progresses along the peripheral surface of two of the bodies 27. It will therefore be appreciated that the shaft 18 will, in the embodiment of Figure 3 perform two complete reciprocations for every rotation of the coil 12 as compared to the embodiment of Figure 1 in which one complete rotation causes only a single reciprocation of the shaft 18.

Figures 4 and 5 show alternative embodiments of the cleaning means. Figure 4 is similar to the embodiment of Figure 1 except that each body 22a has an arcuate profile to its peripheral surface rather than the V-shaped profile of Figure 1. Figure 5 is similar to the embodiment illustrated in Figure 3 except that the peripheral surface of each body 27a of Figure 5 is arcuate rather than V-shaped.

Of course, it will be appreciated that other profiles for the perpheral surface of the camming and cleaning bodies may be provided.

In all of the embodiments illustrated the same bodies not only contact the turns of the coil to clean the coil, but also provide the camming action which in its turn causes the necessary reciprocation of the shaft 18. However, it would be possible to separate these two functions. For example, the shaft 18 could be provided with two spaced bodies as 22 at either end thereof to provide for the reciprocation of the shaft. Between these two bodies 22 the shaft could carry spikes, bars or other projections arranged to project into the spaces between the turns of the coil 12 to effect cleaning of the coil upon reciprocation of the shaft 18.

It will be appreciated that variations in or modifications to the embodiments described and illustrated above may be made within the scope of the present invention as defined by the claims.

## Claims (Claims for the following Contracting State(s): AT, BE, CH, ES, LI, SE)

1. Apparatus comprising a coil (12) mounted for rotation about the longitudinal axis of the coil, and means for cleaning the coil, said cleaning means comprising at least one cleaning element (22, 22a, 27, 27a) for engaging with or protruding into said coil, the or each cleaning element being supported by a shaft (18) extending substantially parallel to said longitudinal axis of the coil (12), the apparatus being characterised in that means (23, 24) are provided for reciprocating said shaft in a direction generally towards and away from said coil.

2. Apparatus as claimed in Claim 1, wherein said shaft (18) is arranged to be reciprocated in a direction having at least a component substantially perpendicular to said longitudinal axis.

3. Apparatus as claimed in any preceding claim, wherein at least one camming element (22, 22a, 27, 27a) is arranged to engage said coil (12) such that a camming action is produced between said camming element and said coil which is arranged to move said shaft in said direction having at least a component substantially perpendicular to said longitudinal axis.

4. Apparatus as claimed in Claim 3, wherein said shaft (18) is resiliently biassed and said camming action is arranged to move said shaft against the action of the bias.

5. Apparatus as claimed in Claim 3 or 4, wherein at least two spaced camming elements (22, 22a, 27, 27a) are carried by said shaft (18), and a plurality of cleaning elements are also carried by said shaft.

6. Apparatus as claimed in Claim 5, wherein said cleaning elements are spikes, bars, blades or other projections arranged to protrude between turns of the coil.

7. Apparatus as claimed in Claim 4, wherein each said camming element (22, 22a, 27, 27a) comprises a body having a peripheral surface (23) surrounding said shaft (18) and having at least one portion arranged to protrude and to engage turns of said coil under the action of the bias of said shaft.

8. Apparatus as claimed in Claim 7, wherein said shaft (18) carries a plurality of cleaning elements, and each said cleaning element (22, 22a, 27, 27a) is also configured to constitute a said camming element.

9. Apparatus as claimed in Claim 8, wherein each turn of the coil (12) has at least one said cleaning and camming element (22, 22a, 27, 27a) associated therewith.

10. An earth working apparatus comprising a frame (11), a coil (12) supported by the frame for rotation about the longitudinal axis of the coil in contact with the earth for the purposes of earth working, and means for cleaning the coil, said cleaning means comprising at least one cleaning element (22, 22a, 27, 27a) for engaging with or protruding into said coil, the or each cleaning element being supported by a shaft (18) extending substantially parallel to said longitudinal axis of the coil, the apparatus being characterised in that means (23, 24) are provided for reciprocating said shaft in a direction generally towards and away from said coil.

11. Earth working apparatus as claimed in Claim 10 and comprising an apparatus in accordance with any of Claims 2 to 9.

12. Earth working apparatus as claimed in Claim 10 or 11, wherein said shaft (18) is also supported by said frame (11).

13. Earth working apparatus as claimed in Claim 12, wherein the ends of said shaft (18) are each journalled in bearings carried by a respective bearing plate (16) and each said bearing plate is movably mounted on said frame.

14. Earth working apparatus as claimed in Claim 13, wherein said shaft (18) is resiliently biassed by tension springs (24) connected between said bearing plates (16) and said frame (11).

## Claims (Claims for the following Contracting State(s): DE, FR, IT, NL)

1. Apparatus comprising a coil (12) mounted for rotation about the longitudinal axis of the coil, and means for cleaning the coil, said cleaning means comprising at least one cleaning element (22, 22a, 27, 27a) for engaging with or protruding into said coil, the or each cleaning element being supported by a shaft (18) extending substantially parallel to said longitudinal axis of the coil (12), characterised by means (23, 24) for reciprocating said shaft (18) in a direction having at least a component substantially perpendicular to said longitudinal axis, said means for reciprocating said shaft comprising at least one camming element (22, 22a, 27, 27a) arranged to engage said coil (12) such that a camming action is produced between said camming element and said coil to reciprocate said shaft (18) as the coil rotates.

2. Apparatus as claimed in Claim 1, wherein said shaft (18) is resiliently biassed and said camming action is arranged to move said shaft against the action of the bias.

3. Apparatus as claimed in Claim 1 or 2, wherein at least two spaced camming elements (22, 22a, 27, 27a) are carried by said shaft (18), and a plurality of cleaning elements are also carried by said shaft.

4. Apparatus as claimed in Claim 3, wherein said cleaning elements are spikes, bars, blades or other projections arranged to protrude between turns of the coil.

5. Apparatus as claimed in Claim 2, wherein each said camming element (22, 22a, 27, 27a) comprises a body having a peripheral surface (23) surrounding said shaft (18) and having at least one portion arranged to protrude and to engage turns of said coil under the action of the bias of said shaft.

6. Apparatus as claimed in Claim 5, wherein said shaft (18) carries a plurality of cleaning elements, and each said cleaning element (22, 22a, 27, 27a) is also configured to constitute a said camming element.

7. Apparatus as claimed in Claim 6, wherein each turn of the coil (12) has at least one said cleaning and camming element (22,22a, 27, 27a) associated therewith.

8. An earth working apparatus comprising a frame (11), a coil (12) supported by the frame for rotation about the longitudinal axis of the coil in contact with the earth for the purposes of earth working, and means for cleaning the coil, said cleaning means comprising at least one cleaning element (22, 22a, 27, 27a) for engaging with or protruding into said coil, the or each cleaning element being supported by a shaft (18) extending substantially parallel to said longitudinal axis of the coil characterised by means (23, 24) for reciprocating said shaft in a direction having at least a component substantially perpendicular to said longitudinal axis, said means for reciprocating said shaft comprising at least one camming element (22, 22a, 27, 27a) arranged to engage said coil (12) such that a camming action is produced between said camming element and said coil to reciprocate said shaft (18) as the coil rotates.

9. Earth working apparatus as claimed in Claim 8, wherein said shaft (18) is also supported by said frame (11).

10. Earth working apparatus as claimed in Claim 9, wherein the ends of said shaft (18) are each journalled in bearings carried by a respective bearing plate (16) and each said bearing plate is movably mounted on said frame.

11. Earth working apparatus as claimed in Claim 10, wherein said shaft (18) is resiliently biassed by tension springs (24) connected between said bearing plates and said frame (11).

12. Earth working apparatus as claimed in any of Claims 8 to 11, wherein the said cleaning means comprises a plurality of camming and cleaning bodies (22, 22a, 27, 27a) arranged along the length of said shaft (18), each said body being substantially in the shape of two adjoining truncated cones, and wherein said coil (12) is substantially helical and the pitch of said helical coil is substantially the same as that of said cleaning and camming bodies such that said bodies protrude between the turns of said coil in a regular manner.

13. Earth working apparatus as claimed in Claim 12, wherein said helical coil (12) has a central axial core (15) extending substantially parallel to said shaft.

## Patentansprüche (Patentansprüche für folgende(n) Vertragsstaat(en): AT, BE, CH, ES, LI, SE)

1. Vorrichtung mit einer Wendel (12), die um die Längsachse der Wendel rotierbar montiert ist, und Einrichtung zum Reinigen der Wendel, wobei die Reinigungseinrichtung mindestens ein Reinigungselement (22, 22a, 27, 27a) zum Eingriff mit der Wendel oder zum Vorragen in diese aufweist, wobei das oder jedes Reinigungselement von einem Schaft (18) gestützt ist, der sich im wesentlichen parallel zu der Längsachse der Wendel (12) erstreckt, wobei die Vorrichtung dadurch gekennzeichnet ist, daß eine Einrichtung (23, 24) zum Hin- und Herbewegen des Schafts in eine Richtung im allgemeinen auf die Wendel zu und von dieser weg, vorgesehen ist.

2. Vorrichtung nach Anspruch 1, wobei der Schaft (18) so angeordnet ist, daß er in einer Richtung, die mindestens eine Komponente hat, die im wesentlichen senkrecht zu der Längsachse ist, hin- und herbewegt werden kann.

3. Vorrichtung nach einem der vorhergehenden Ansprüche, wobei mindestens ein Eingriffselement (22, 22a, 27, 27a) zum Eingriff in die Wendel (12) so angeordnet ist, daß eine Eingriffswirkung zwischen dem Eingriffselement und der Wendel erzeugt wird, wobei diese zum Bewegen des Schafts in der Richtung ausgebildet ist, die mindestens eine Komponente hat, die im wesentlichen im rechten Winkel zur Längsachse steht.

4. Vorrichtung nach Anspruch 3, wobei der Schaft (18) federnd vorgespannt ist und die Eingriffswirkung so ausgebildet ist, daß sie den Schaft entgegen der Wirkung der Vorspannung bewegt.

5. Vorrichtung nach Anspruch 3 oder 4, wobei mindestens zwei beabstandete Eingriffselemente (22, 22a, 27, 27a) sowie auch eine Mehrzahl von Reinigungselementen von dem Schaft (18) getragen sind.

6. Vorrichtung nach Anspruch 5, wobei die Reinigungselemente Dorne, Stangen, Schaufeln oder andere Vorsprünge sind, die so angeordnet sind, daß sie zwischen Windungen der Wendel vorstehen.

7. Vorrichtung nach Anspruch 4, wobei jedes Eingriffselement (22, 22a, 27, 27a) einen Körper mit einer Umfangsfläche (23) aufweist, die den Schaft (18) umgibt und mindestens einen Abschnitt aufweist, der so angeordnet ist, daß er vorsteht und unter der Wirkung der Vorspannung des Schafts an Windungen der Wendel angreift.

8. Vorrichtung nach Anspruch 7, wobei der Schaft (18) eine Mehrzahl von Reinigungselementen trägt und jedes der Reinigungselemente (22, 22a, 27, 27a) auch so konfiguriert ist, daß es ein Eingriffselement bildet.

9. Vorrichtung nach Anspruch 8, wobei jede Windung der Wendel (12) mindestens ein solches Reinigungs- und Eingriffselement (22, 22a, 27, 27a) zugeordnet hat.

10. Bodenbearbeitungsvorrichtung mit einem Rahmen (11), einer Wendel (12), die von dem Rahmen für eine Rotation um die Längsachse der Wendel in Kontakt mit dem Boden zum Bearbeiten desselben gestützt ist, und einer Einrichtung zum Reinigen der Wendel, wobei die Reinigungseinrichtung mindestens ein Reinigungselement (22, 22a, 27, 27a) zum Eingriff mit der Wendel oder zum Vorragen in diese aufweist, wobei das oder jedes Reinigungselement von einem Schaft (18) gestützt ist, der sich im wesentlichen parallel zur Längsachse der Wendel erstreckt, wobei die Vorrichtung dadurch gekennzeichnet ist, daß eine Einrichtung (23, 24) vorgesehen ist, die den Schaft in eine Richtung im allgemeinen auf die Wendel zu und von dieser weg hin- und herbewegt.

11. Bodenbearbeitungsvorrichtung nach Anspruch 10, mit einer Vorrichtung gemäß einem der Ansprüche 2 bis 9.

12. Bodenbearbeitungsvorrichtung nach Anspruch 10 oder 11, wobei der Schaft (18) auch durch den Rahmen (11) gestützt ist.

13. Bodenbearbeitungsvorrichtung nach Anspruch 12, wobei die Enden des Schafts (18) jeweils in Lagern gelagert sind, die durch eine jeweilige Lagerplatte (16) getragen sind und jede Lagerplatte auf dem Rahmen beweglich angebracht ist.

14. Bodenbearbeitungsvorrichtung nach Anspruch 13, wobei der Schaft (18) durch Zugfedern (24), die zwischen den Lagerplatten (16) und dem Rahmen (11) eingeschaltet sind, federnd vorgespannt ist.

## Patentansprüche (Patentansprüche für folgende(n) Vertragsstaat(en): DE, FR, IT, NL)

1. Vorrichtung mit einer Wendel (12), die um die Längsachse der Wendel rotierbar montiert ist, und Einrichtung zum Reinigen der Wendel, wobei die Reinigungseinrichtung mindestens ein Reinigungselement (22, 22a, 27, 27a) zum Eingriff mit der Wendel oder zum Vorragen in diese aufweist, wobei das oder jedes Reinigungselement von einem Schaft (18) gestützt ist, der sich im wesentlichen parallel zu der Längsachse der Wendel (12) erstreckt, gekennzeichnet durch eine Einrichtung (23, 24) zum Hin- und Herbewegen des Schafts (18) in eine Richtung, die mindestens eine Komponente hat, die im wesentlichen im rechten Winkel zur Längsachse steht, wobei die Einrichtung zum Hin- und Herbewegen des Schafts mindestens ein Eingriffselement (22, 22a, 27, 27a) aufweist, das so angeordnet ist, daß es in die Wendel (12) derart eingreift, daß eine Eingriffswirkung zwischen dem Eingriffselement und der Wendel erzielt wird, um den Schaft (18) hin- und herzubewegen, wenn sich die Wendel dreht.

2. Vorrichtung nach Anspruch 1, wobei der Schaft (18) federnd vorgespannt ist und die Eingriffswirkung so ausgebildet ist, daß sie den Schaft entgegen der Wirkung der Vorspannung bewegt.

3. Vorrichtung nach Anspruch 1 oder 2, wobei mindestens zwei beabstandete Eingriffselemente (22, 22a, 27, 27a) sowie auch eine Mehrzahl von Reinigungselementen von dem Schaft (18) getragen sind.

4. Vorrichtung nach Anspruch 3, wobei die Reinigungselemente Dorne, Stangen, Schaufeln oder andere Vorsprünge sind, die so angeordnet sind, daß sie zwischen Windungen der Wendel vorstehen.

5. Vorrichtung nach Anspruch 2, wobei jedes Eingriffselement (22, 22a, 27, 27a) einen Körper mit einer Umfangsfläche (23) aufweist, die den Schaft (18) umgibt und mindestens einen Abschnitt aufweist, der so angeordnet ist, daß er vorsteht und unter der Wirkung der Vorspannung des Schafts an Windungen der Wendel angreift.

6. Vorrichtung nach Anspruch 5, wobei der Schaft (18) eine Mehrzahl von Reinigungselementen trägt und jedes der Reinigungselemente (22, 22a, 27, 27a) auch so konfiguriert ist, daß es ein Eingriffselement bildet.

7. Vorrichtung nach Anspruch 6, wobei jede Windung der Wendel (12) mindestens ein solches Reinigungs- und Eingriffselement (22, 22a, 27, 27a) zugeordnet hat.

8. Bodenbearbeitungsvorrichtung mit einem Rahmen (11), einer Wendel (12), die von dem Rahmen für eine Rotation um die Längsachse der Wendel in Kontakt mit dem Boden zum Bearbeiten desselben gestützt ist, und einer Einrichtung zum Reinigen der Wendel, wobei die Reinigungseinrichtung mindestens ein Reinigungselement (22, 22a, 27, 27a) zum Eingriff mit der Wendel oder zum Vorragen in diese aufweist, wobei das oder jedes Reinigungselement von einem Schaft (18) gestützt ist, der sich im wesentlichen parallel zur Längsachse der Wendel erstreckt, gekennzeichnet durch eine Einrichtung (23, 24) zum Hin- und Herbewegen des Schafts in einer Richtung, die mindestens eine Komponente hat, die im wesentlichen im rechten Winkel zu der Längsachse ist, wobei die Einrichtung zum Hin- und Herbewegen des Schafts mindestens ein Eingriffselement (22, 22a, 27, 27a) aufweist, das so zum Eingriff in die Wendel (12) ausgebildet ist, daß eine Eingriffswirkung zwischen dem Eingriffselement und der Wendel erzeugt wird, um den Schaft (18) hin- und herzubewegen, wenn sich die Wendel dreht.

9. Bodenbearbeitungsvorrichtung nach Anspruch 8, wobei der Schaft (18) auch durch den Rahmen (11) gestützt ist.

10. Bodenbearbeitungsvorrichtung nach Anspruch 9, wobei die Enden des Schafts (18) jeweils in Lagern gelagert sind, die durch eine jeweilige Lagerplatte (16) getragen sind und jede Lagerplatte auf dem Rahmen beweglich angebracht ist.

11. Bodenbearbeitungsvorrichtung nach Anspruch 10, wobei der Schaft (18) durch Zugfedern (24), die zwischen den Lagerplatten und dem Rahmen (11) eingeschaltet sind, federnd vorgespannt ist.

12. Bodenbearbeitungsvorrichtung nach einem der Ansprüche 8 bis 11, wobei die Reinigungseinrichtung eine Mehrzahl von Eingriffs- und Reinigungskörpern (22, 22a, 27, 27a) aufweist, die entlang der Länge des Schafts (18) angeordnet sind, wobei jeder Körper im wesentlichen die Form von zwei benachbarten Kegelstümpfen hat und wobei die Wendel (12) im wesentlichen schraubenförmig ist und die Teilung der Wendel im wesentlichen dieselbe ist wie die der Reinigungs- und Eingriffskörper, so daß die Körper zwischen den Windungen der Wendel gleichmäßig vorstehen.

13. Bodenbearbeitungsvorrichtung nach Anspruch 12, wobei die Wendel (12) einen zentralen axialen Kern (15) aufweist, der sich im wesentlichen parallel zu dem Schaft erstreckt.

## Revendications (Revendications pour l'(les) Etat(s) contractant(s) suivant(s): AT, BE, CH, ES, LI, SE)

1. Appareil comprenant un outil en spirale (12) monté à rotation autour de l'axe longitudinal de la spirale, et des moyens pour nettoyer la spirale, lesdits moyens de nettoyage comprenant au moins un élément de nettoyage (22, 22a, 27, 27a) agencé de façon à entrer en contact avec ladite spirale ou à faire saillie dans celle-ci, le ou chaque élément de nettoyage étant supporté par un arbre (18) qui s'étend dans une direction essentiellement parallèle audit axe longitudinal de la spirale (12), l'appareil étant caractérisé en ce que des moyens (23, 24) sont prévus pour produire un mouvement de va-et-vient dudit arbre dans la direction générale de son rapprochement et de son éloignement de ladite spirale.

2. Appareil selon la revendication 1, dans lequel ledit arbre (18) est agencé de façon à effectuer un mouvement de va-et-vient dans une direction qui présente au moins une composante essentiellement perpendiculaire audit axe longitudinal.

3. Appareil selon la revendication 1 ou 2, dans lequel au moins un élément-came (22, 22a, 27, 27a) est agencé de façon à entrer en contact avec ladite spirale (12), de sorte qu'il soit produit, entre ledit élément-came et ladite spirale, un effet de came propre à déplacer ledit arbre dans ladite direction qui présente au moins une composante essentiellement perpendiculaire audit axe longitudinal.

4. Appareil selon la revendication 3, dans lequel ledit arbre (18) est sollicité élastiquement et ledit effet de came est propre à déplacer ledit arbre contre l'action antagoniste de cette sollicitation.

5. Appareil selon la revendication 3 ou 4, dans lequel au moins deux éléments-cames (22, 22a, 27, 27a) espacés sont supportés par ledit arbre (18), et une multiplicité d'éléments de nettoyage sont également supportés par ledit arbre.

6. Appareil selon la revendication 5, dans lequel lesdits éléments de nettoyage sont des pointes, des barres, des lames ou d'autres saillies agencées de façon à faire saillie entre des spires de la spirale.

7. Appareil selon la revendication 4, dans lequel chacun desdits éléments-cames (22, 22a, 27, 27a) comprend un corps qui présente une surface périphérique (23) entourant ledit arbre (18) et comportant au moins une partie agencée de façon à faire saillie et à entrer en contact avec des spires de ladite spirale sous l'effet de la sollicitation à laquelle est soumis ledit arbre.

8. Appareil selon la revendication 7, dans lequel ledit arbre (18) porte une multiplicité d'éléments de nettoyage, et en ce que chacun de ces éléments de nettoyage (22, 22a, 27, 27a) est configuré de manière à constituer également un desdits éléments-cames.

9. Appareil selon la revendication 8, dans lequel il est associé, à chaque spire de la spirale (12), au moins un desdits éléments de nettoyage formant came (22, 22a, 27, 27a).

10. Appareil de travail de la terre, comprenant un châssis (11), un outil en spirale (12) supporté par le châssis à rotation autour de l'axe longitudinal de la spirale au contact du sol, à des fins de travail de la terre, et des moyens pour nettoyer la spirale, lesdits moyens de nettoyage comprenant au moins un élément de nettoyage (22, 22a, 27, 27a) agencé de façon à entrer en contact avec ladite spirale ou à faire saillie dans celle-ci, le ou chaque élément de nettoyage étant supporté par un arbre (18) qui s'étend dans une direction essentiellement parallèle audit axe longitudinal de la spirale, l'appareil étant caractérisé en ce que des moyens (23, 24) sont prévus pour produire un mouvement de va-et-vient dudit arbre dans la direction générale de son rapprochement et de son éloignement de ladite spirale.

11. Appareil de travail de la terre selon la revendication 10, comprenant un appareil selon l'une quelconque des revendications 2 à 9.

12. Appareil de travail de la terre selon la revendication 10 ou 11, dans lequel ledit arbre (18) est supporté lui aussi par ledit châssis (11).

13. Appareil de travail de la terre selon la revendication 12, dans lequel les extrémités dudit arbre (18) sont montées chacune à rotation dans un palier que porte une plaque d'appui (16) respective, et chacune desdites plaques d'appui est montée mobile sur ledit châssis.

14. Appareil de travail de la terre selon la revendication 13, dans lequel ledit arbre (18) est sollicité élastiquement par des ressorts de tension (24) reliés entre lesdites plaques d'appui (16) et ledit châssis (11).

## Revendications (Revendications pour l'(les) Etat(s) contractant(s) suivant(s): DE, FR, IT, NL)

1. Appareil comprenant un outil en spirale (12) monté à rotation autour de l'axe longitudinal de la spirale, et des moyens pour nettoyer la spirale, lesdits moyens de nettoyage comprenant au moins un élément de nettoyage (22, 22a, 27, 27a) agencé de façon à entrer en contact avec ladite spirale ou à faire saillie dans celle-ci, le ou chaque élément de nettoyage étant supporté par un arbre (18) qui s'étend dans une direction essentiellement parallèle audit axe longitudinal de la spirale (12), caractérisé par des moyens (23, 24) pour produire un mouvement de va-et-vient dudit arbre (18) dans une direction qui présente au moins une composante essentiellement perpendiculaire audit axe longitudinal, lesdits moyens destinés à produire un mouvement de va-et-vient dudit arbre comprenant au moins un élément-came (22, 22a, 27, 27a) agencé de façon à entrer en contact avec ladite spirale (12), de sorte qu'il soit produit, entre ledit élément-came et ladite spirale, un effet de came pour produire un mouvement de va-et-vient dudit arbre (18) tandis que la spirale tourne.

2. Appareil selon la revendication 1, dans lequel ledit arbre (18) est sollicité élastiquement et ledit effet de came est propre à déplacer ledit arbre contre l'action antagoniste de cette sollicitation.

3. Appareil selon la revendication 1 ou 2, dans lequel au moins deux éléments-cames (22, 22a, 27, 27a) espacés sont supportés par ledit arbre (18), et une multiplicité d'éléments de nettoyage sont également supportés par ledit arbre.

4. Appareil selon la revendication 3, dans lequel lesdits éléments de nettoyage sont des pointes, des barres, des lames ou d'autres saillies agencées de façon à faire saillie entre des spires de la spirale.

5. Appareil selon la revendication 2, dans lequel chacun desdits éléments-cames (22, 22a, 27, 27a) comprend un corps qui présente une surface périphérique (23) entourant ledit arbre (18) et comportant au moins une partie agencée de façon à faire saillie et à entrer en contact avec des spires de ladite spirale sous l'effet de la sollicitation à laquelle est soumis ledit arbre.

6. Appareil selon la revendication 5, dans lequel ledit arbre (18) porte une multiplicité d'éléments de nettoyage, et en ce que chacun de ces éléments de nettoyage (22, 22a, 27, 27a) est configuré de manière à constituer également un desdits éléments-cames.

7. Appareil selon le revendication 6, dans lequel il est associé, à chaque spire de la spirale (12), au moins un desdits éléments de nettoyage formant came (22, 22a, 27, 27a).

8. Appareil de travail de la terre, comprenant un châssis (11), un outil en spirale (12) supporté par le châssis à rotation autour de l'axe longitudinal de la spirale au contact du sol, à des fins de travail de la terre, et des moyens pour nettoyer la spirale, lesdits moyens de nettoyage comprenant au moins un élément de nettoyage (22, 22a, 27, 27a) agencé de façon à entrer en contact avec ladite spirale ou à faire saillie dans celle-ci, le ou chaque élément de nettoyage étant supporté par un arbre (18) qui s'étend dans une direction essentiellement parallèle audit axe longitudinal de la spirale, caractérisé par des moyens (23, 24) pour produire un mouvement de va-et-vient dudit arbre dans une direction qui présente au moins une composante essentiellement perpendiculaire audit axe longitudinal, lesdits moyens destinés à produire un mouvement de va-et-vient dudit arbre comprenant au moins un élément-came (22, 22a, 27, 27a) agencé de façon à entrer en contact avec ladite spirale (12), de sorte qu'il soit produit, entre ledit élément-came et ladite spirale, un effet de came pour produire un mouvement de va-et-vient dudit arbre (18) tandis que le spirale tourne.

9. Appareil de travail de la terre selon la revendication 8, dans lequel ledit arbre (18) est supporté lui aussi par ledit châssis (11).

10. Appareil de travail de la terre selon la revendication 9, dans lequel les extrémités dudit arbre (18) sont montées chacune à rotation dans un palier que porte une plaque d'appui (16) respective, et chacune desdites plaques d'appui est montée mobile sur ledit châssis.

11. Appareil de travail de la terre selon la revendication 10, dans lequel ledit arbre (18) est sollicité élastiquement par des ressorts de tension (24) reliés entre ledites plaques d'appui (16) et ledit châssis (11).

12. Appareil de travail de la terre selon l'une quelconque des revendications 8 à 11, dans lequel lesdits moyens de nettoyage comprennent une multiplicité de corps formant came et de nettoyage (22, 22a, 27, 27a) disposés le long de la longueur dudit arbre (18), chacun desdits corps ayant essentiellement la forme de deux cônes tronqués accolés, et dans lequel ladite spirale (12) est essentiellement hélicoïdale et le pas de cette spirale hélicoïdale est pratiquement le même que celui desdits corps de nettoyage formant came, de sorte que lesdits corps fassent saillie de manière régulière entre les spires de ladite spirale.

13. Appareil de travail de la terre selon la revendication 12, dans lequel ladite spirale hélicoïdale (12) comporte un noyau axial central (15) qui s'étend dans une direction essentiellement parellèle audit arbre.
